# EUROPÄISCHE PATENTSCHRIFT

(11) **EP 2 622 241 B1**
(45) Veröffentlichungstag und Bekanntmachung des Hinweises auf die Patenterteilung: **27.09.2017**
(21) Anmeldenummer: 11741202.3
(22) Anmeldetag: 04.08.2011
(51) Int. Cl.: F16H 3/00

(54) **DOPPELKUPPLUNGSGETRIEBE**
DUAL CLUTCH TRANSMISSION
BOÎTE DE VITESSES À EMBRAYAGE DOUBLE

(30) Priorität: 27.09.2010 DE 102010041410
(43) Veröffentlichungstag der Anmeldung: 07.08.2013
(73) Patentinhaber: ZF Friedrichshafen AG, 88046 Friedrichshafen (DE)
(72) Erfinder: GUMPOLTSBERGER, Gerhard, 88048 Friedrichshafen (DE); HUNOLD, Bernard, 88046 Friedrichshafen (DE); LÜBKE, Eckhardt, 88048 Friedrichshafen (DE)
(86) Internationale Anmeldenummer: PCT/EP2011/063409
(87) Internationale Veröffentlichungsnummer: WO 2012/041572

(56) Entgegenhaltungen:
- WO-A1-00/39484
- WO-A1-2008/116562
- DE-A1-102007 037 568
- DE-A1-102007 040 449

## Beschreibung

Die vorliegende Erfindung betrifft ein Doppelkupplungsgetriebe gemäß der im Oberbegriff des Patentanspruches 1 näher definierten Art.

Beispielsweise aus der Druckschrift DE 10 2007 037 568 A1 ist ein Doppelkupplungsgetriebe mit sieben oder acht Vorwärtsgängen und zwei Rückwärtsgängen bekannt. Bei dem Doppelkupplungsgetriebe ist eine Eingangswelle mit einer Hauptwelle durch ein erstes Teilgetriebe und ein zweites Teilgetriebe verbunden, die im Kraftfluss parallel zueinander angeordnet sind. Jedem Teilgetriebe sind eine reibschlüssige Lastschaltkupplung und jeweils eine Zwischenwelle zugeordnet, wobei die Zwischenwellen konzentrisch zueinander angeordnet sind. Ferner sind vier doppelseitig wirkende Schaltelemente mit jeweils einer Schiebemuffe vorgesehen, um die verschiedenen Gangstufen schalten zu können. Um die lastschaltbaren Gänge realisieren zu können, umfasst das Doppelkupplungsgetriebe zwingend sechs Radebenen und zusätzlich eine Rückwärtsgang-Radebene. Dadurch ergeben sich ein hoher Bauaufwand und entsprechend große Abmessungen bei dem bekannten Doppelkupplungsgetriebe.

Der vorliegenden Erfindung liegt die Aufgabe zu Grunde, ein Doppelkupplungsgetriebe der eingangs beschriebenen Gattung vorzuschlagen, welches volllastschaltbar ausgeführt ist und dabei einen möglichst geringen Bauaufwand aufweist.

Diese Aufgabe wird erfindungsgemäß durch die Merkmale des Patentanspruches 1 gelöst, wobei sich weitere vorteilhafte Ausgestaltungen aus den Unteransprüchen und den Zeichnungen ergeben.

Somit wird ein Doppelkupplungsgetriebe mit einer ersten einem ersten Teilgetriebe zugeordneten Kupplung und einer zweiten einem zweiten Teilgetriebe zugeordneten Kupplung vorgeschlagen, deren Eingangsseiten mit einer Antriebswelle und deren Ausgangsseiten mit jeweils einer von zwei koaxial zueinander angeordneten Getriebeeingangswellen verbunden sind, wobei vorzugsweise die eine Getriebeeingangswelle als Hohlwelle und die andere als Vollwelle ausgebildet sind. Ferner umfasst das Doppelkupplungsgetriebe zwei koaxial zueinander angeordnete Vorgelegewellen und eine zur Antriebswelle koaxial angeordnete Abtriebswelle, wobei mehrere Radebenen und zumindest eine Rückwärtsgang-Radebene realisiert werden, denen mehrere Schaltelemente zum Schalten von Losrädern und/oder zum Schalten von Wellenverbindungen zugeordnet sind, so dass mehrere Vorwärtsgänge und zumindest ein Rückwärtsgang schaltbar sind. Erfindungsgemäß sind bei dem Doppelkupplungsgetriebe nur fünf Radebenen derart angeordnet, dass zumindest sieben Vorwärtsgänge lastschaltbar ausgeführt werden können.

Auf diese Weise wird ein sequenziell vollständig lastschaltbares Doppelkupplungsgetriebe mit möglichst geringem Bauaufwand und minimalen Abmessungen geschaffen, bei dem zudem auch Rückwärtsgänge zueinander lastschaltbar sind.

Im Rahmen einer ersten Ausgestaltung der Erfindung kann vorgesehen sein, dass in der ersten Radebene ein Festrad der zweiten zum Beispiel als Hohlwelle ausgebildeten Getriebeeingangswelle mit einem Festrad der zweiten beziehungsweise inneren Vorgelegewelle in Eingriff steht. Somit ist die erste Radebene als treibene Radebene für Übersetzungen des zweiten Teilgetriebes nutzbar.

Vorzugsweise kann in der zweiten Radebene ein Losrad der ersten Getriebeeingangswelle, welche als innere Welle beziehungsweise Vollwelle ausgebildet ist, mit einem Festrad der ersten, zum Beispiel äußeren, als Hohlwelle ausgebildeten Vorgelegewelle in Eingriff stehen. Somit ist die zweite Radebene als treibende Radebene für Übersetzungen des ersten Teilgetriebes nutzbar. Auch die dritte Radebene steht für Übersetzungen des ersten Teilgetriebes jedoch sowohl treibend als auch getrieben zur Verfügung, da dort ein Losrad der ersten Getriebeeingangswelle mit einem Festrad der ersten Vorgelegewelle in Eingriff steht. Schließlich steht in der vierten Radebene ein Losrad der Abtriebswelle mit einem Festrad der äußeren ersten Vorgelegewelle in Eingriff, so dass die vierte Radebene ebenfalls für Übersetzungen des ersten Teilgetriebes einsetzbar ist.

Eine nächste Weiterbildung der Erfindung sieht vor, dass die fünfte Radebene dem zweiten Teilgetriebe für Übersetzungen zur Verfügung steht, wobei in der fünften Radebene ein Festrad der Abtriebswelle mit einem Losrad der inneren beziehungsweise zweiten Vorgelegewelle in Eingriff steht.

Zur Realisierung von Rückwärtsgangübersetzungen ist eine Drehzahlumkehr erforderlich. Dazu steht in einer Rückwärtsgang-Radebene ein Losrad der Abtriebswelle mit einem Zwischenrad einer Zwischenwelle in Eingriff, wobei das Zwischenrad mit einem Festrad der zweiten Vorgelegewelle kämmt. Um das Losrad mit der Abtriebswelle verbinden zu können, ist der Rückwärtsgang-Radebene z. B. ein einfach wirkendes Schaltelement zugeordnet.

Zum Schalten von Losrädern, um ein vorbestimmtes Losrad mit einer zugeordneten Welle zu verbinden, und auch zum Realisieren von Wellenverbindungen, um zwei Wellen miteinander zu verbinden, sind mehrere Schaltelemente bei dem erfindungsgemäßen Doppelkupplungsgetriebe vorgesehen. Beispielsweise sind zum Schalten der Vorwärtsgänge vorzugsweise drei doppelseitig wirkende Schaltelemente vorgesehen. Dabei können zwei der drei Schaltelemente ausschließlich zum Schalten beziehungsweise zum drehfesten Verbinden von Losrädern vorgesehen sein, wobei ein Schaltelement sowohl ein Losrad schaltet als auch eine Verbindung zweier Wellen realisiert. Hierbei können jedoch auch andere Konstellationen der Schaltelemente vorgesehen werden, ohne dabei jedoch die Anzahl der erforderlichen Schaltelemente zu erhöhen.

Es ist auch möglich, dass anstelle der doppelseitig wirkenden Schaltelemente auch eine entsprechende Anzahl von einseitig wirkenden Schaltelementen oder dergleichen eingesetzt werden. Als Schaltelemente könne können zum Beispiel hydraulisch, elektrisch, pneumatisch, mechanisch betätigte Kupplungen oder auch formschlüssige Klauenkupplungen sowie jede Art von Synchronisierung ein eingesetzt werden, die auch bei Bedarf eine Innenbetätigung aufweisen können.

Beispielsweise kann ein erstes doppelseitig wirkendes Schaltelement der zweiten und der dritten Radebene zugeordnet sein, wobei die zugeordneten Losräder jeweils mit der ersten Getriebeeingangswelle im geschalteten Zustand des Schaltelements verbunden werden. Auf diese Weise kann je nach Schaltrichtung die zweite Radebene oder die dritte Radebene treibend für eine Übersetzung des ersten Teilgetriebes eingesetzt werden.

Eine nächste Ausgestaltung sieht vor, dass ein zweites doppelseitig wirkendes Schaltelement der dritten Radebene und der vierten Radebene derart zugeordnet sind, dass die jeweils zugeordneten Losräder drehfest mit der Abtriebswelle verbunden werden können. Somit kann je nach Schaltrichtung die dritte Radebene und die vierte Radebene für Übersetzungen des ersten Teilgetriebes eingesetzt werden.

Eine nächste Weiterbildung der Erfindung kann vorsehen, dass ein drittes doppelseitig wirkendes Schaltelement der vierten Radebene und der fünften Radebene im Bereich der Vorgelegewellen zugeordnet ist. Einerseits kann das der fünften Radebene zugeordnete Losrad mit der inneren, zweiten Vorgelegewelle und andererseits die zweite Vorgelegewelle mit der äußeren, ersten Vorgelegewelle drehfest verbunden werden. Somit werden die beiden Teilgetriebe miteinander gekoppelt, wenn das der vierten Radebene zugeordnete Schaltelement aktiviert wird. Bei aktiviertem Schaltelement der fünften Radebene wird die fünfte Radebene als getriebene Radebene für Übersetzungen des zweiten Teilgetriebes verwendet.

Mit dem erfindungsgemäß vorgeschlagenen Doppelkupplungsgetriebe sind über die fünf Radebenen sieben lastschaltbare Vorwärtsgänge realisierbar, wobei der siebente Vorwärtsgang vorzugsweise als Direktgang insbesondere bei einem Nutzfahrzeug im Rahmen einer Fernverkehrsbetrachtung ausgeführt ist. Bei den möglichen Rückwärtsgangübersetzungen sind ebenfalls lastschaltbare Rückwärtsgänge möglich. Durch das Hinzufügen weiterer Radebenen und Synchronisierungen beziehungsweise Schaltelemente an entsprechenden Positionen können weitere zusätzliche Gänge erzeugt werden. Ebenfalls ist es auch möglich, dass ohne mechanische Änderungen mit dem vorhandenen Radsatz ein Fünf- oder auch ein Sechs-Ganggetriebe realisierbar ist, die volllastschaltbar sind.

Es ist möglich, dass das vorgeschlagene Doppelkupplungsgetriebe bei beliebigen Fahrzeugen eingesetzt werden kann. Vorzugsweise kann es auch bei Nutzfahrzeugen verwendet werden, bei denen es vorteilhaft ist, wenn zum Beispiel eine oder mehrere Bereichsgruppengetriebe vor- oder nachgeschaltet werden, um die Anzahl der verfügbaren Gänge des Hauptgetriebes zu vervielfachen.

Nachfolgend wird die vorliegende Erfindung anhand der Figuren weiter erläutert. Es zeigen:
- Fig. 1: eine schematische Ansicht einer möglichen Ausführungsvariante eines erfindungsgemäßen Doppelkupplungsgetriebes; und
- Fig. 2: ein mögliches Schaltschema des in Figur 1 dargestellten Doppelkupplungsgetriebes.

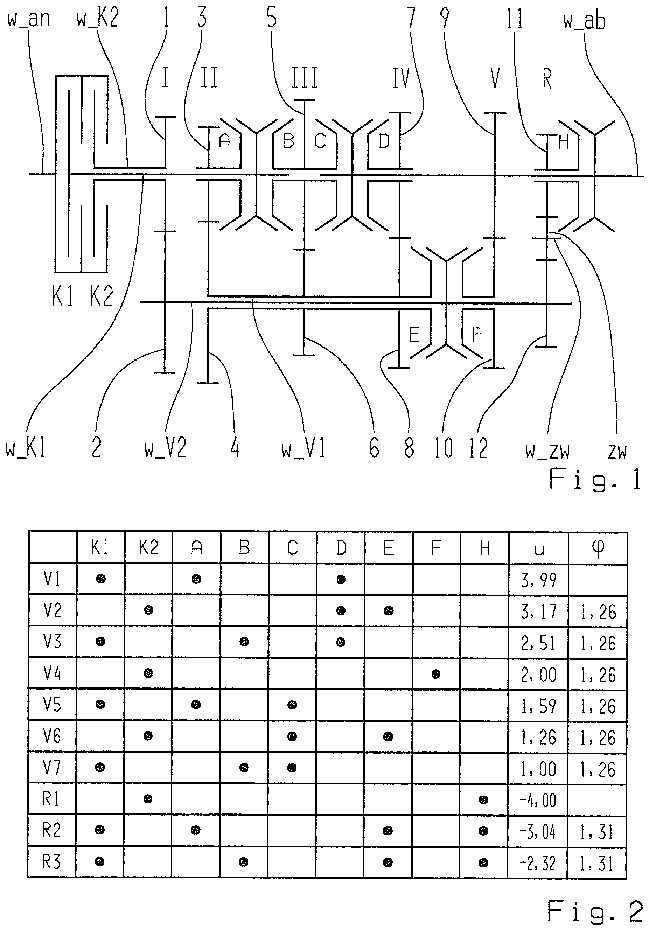

In den Figuren ist eine mögliche Ausführungsvariante eines Doppelkupplungsgetriebes anhand eines Siebengang-Doppelkupplungsgetriebes gezeigt. Das beispielhaft angegebene Schaltschema zu der Ausführungsvariante ist in Figur 2 tabellarisch dargestellt.

Der in Figur 1 dargestellte Radsatz für das erfindungsgemäße Doppelkupplungsgetriebe kann ohne mechanische Veränderungen auch für ein Sechsgang- oder auch Fünfgang-Doppelkupplungsgetriebe eingesetzt werden, wenn z. B. Gänge aus dem Schaltschema gemäß Figur 2 weggelassen werden.

Das Doppelkupplungsgetriebe umfasst zwei Kupplungen K1, K2 , deren Eingangsseiten mit einer Antriebswelle w_an und deren Ausgangsseiten mit jeweils einer von zwei koaxial zueinander angeordneten Getriebeeingangswellen w_k1, w_k2 verbunden sind, wobei die erste Getriebeeingangswelle w_k1 dem ersten Teilgetriebe und die zweite Getriebeeingangswelle w_k2 dem zweiten Teilgetriebe zugeordnet sind. Koaxial zu der Antriebswelle w_an ist eine Abtriebswelle w_ab angeordnet. Die erste Getriebeeingangswelle w_k1 ist in dem gezeigten Ausführungsbeispiel als Vollwelle und die zweite Getriebeeingangswelle w_k2 als Hohlwelle ausgebildet. Ferner umfasst das Doppelkupplungsgetriebe zwei ebenfalls zueinander koaxial angeordnete Vorgelegewellen w_v1 und w_v2, wobei die erste Vorgelegewelle w_v1 bei dem gezeigten Ausführungsbeispiel als Hohlwelle und die zweite Vorgelegewelle w_v2 als Vollwelle ausgebildet sind.

An der ersten Getriebeeingangswelle w_k1 ist als Gangzahnrad bzw. Zahnradstufe ein drehfest mit der Getriebeeingangswelle w_k1 verbundenes Festrad 1 vorgesehen. Der zweiten Getriebeeingangswelle w_k2 sind zwei schaltbare Losräder 3, 5 zugeordnet. Mit der ersten Vorgelegewelle w_v1 sind drei Festräder 4, 6, 8 drehfest verbunden. Mit der zweiten Vorgelegewelle w_v2 sind zwei Festräder 2,12 verbunden, wobei der zweiten Vorgelegewelle w_v2 zusätzlich ein schaltbares Losrad 10 zugeordnet ist. Schließlich sind der Abtriebswelle w_ab zwei schaltbare Losräder 7, 11 zugeordnet, wobei zusätzlich ein Festrad 9 drehfest mit der Abtriebswelle w_ab verbunden ist.

Erfindungsgemäß sind bei dem vorgeschlagenen Doppelkupplungsgetriebe lediglich fünf Radebenen I, II, III, IV, V und eine Rückwärtsgang-Radebene R vorgesehen und derart angeordnet, dass zumindest sieben lastschaltbare Vorwärtsgänge V1, V2, V3, V4, V5, V6, V7 ausführbar sind, wobei vorzugsweise der siebente Vorwärtsgang V7 als direkter Gang realisiert ist.

In der ersten Radebene I kämmt das Festrad 1 der zweiten Getriebeeingangswelle w_k2 mit dem Festrad 2 der zweiten Vorgelegewelle w_v2, wobei in der zweiten Radebene II das Losrad 3 der ersten Getriebeeingangswelle w_k1 mit dem Festrad 4 der ersten Vorgelegewelle w_v1 kämmt. In der dritten Radebene III steht das Losrad 5 der ersten Getriebeeingangswelle w_k1 mit dem Festrad 6 der ersten Vorgelegewelle w_v1 in Eingriff. Bei der vierten Radebene IV kämmt das Losrad 7 der Abtriebswelle w_ab mit dem Festrad 8 der ersten Vorgelegewelle w_v1. Schließlich steht in der fünften Radebene V das Festrad 9 der Abtriebswelle w_ab mit dem Losrad 10 der zweiten Vorgelegewelle w_v2 in Eingriff.

In der Rückwärtsgang-Radebene R kämmt das Losrad 11 der Abtriebswelle w_ab mit einem Zwischenrad zw einer Zwischenwelle w_zw zur Drehzahlumkehr für die Rückwärtsgangübersetzungen, wobei das Zwischenrad zw wiederum mit dem Festrad 12 der zweiten Vorgelegewelle w_v2 in Eingriff steht.

Somit wird die erste Radebene I über die als Hohlwelle ausgebildete zweite Getriebeeingangswelle w_k2 realisiert, wobei über die erste Vorgelegewelle w_v1, welche ebenfalls als Hohlwelle ausgebildet ist, die zweite Radebene II, die dritte Radebene III und vierte Radebene IV gebildet werden.

Zum Schalten der Losräder 3, 5, 7, 10, 11 und zum Verbinden der beiden Vorgelegewellen w_v1 und w_v2 sind drei Synchronisierungen beziehungsweise doppelseitig wirkende Schaltelemente A-B, C-D, E-F und ein einfach wirkendes Schaltelement H vorgesehen.

In der in Figur 2 dargestellten Tabelle ist beispielhaft für den in Figur 1 dargestellten Radsatz ein Schaltschema angegeben, in dem mit u die jeweilige Übersetzung und mit ϕ der jeweilige Stufensprung angegeben sind, wobei die Werte nur beispielhaft genannt sind.

Im Einzelnen ergibt sich bei dem beispielhaft beschriebenen Siebengang-Doppelkupplungsgetriebe aus dem Schaltschema, dass der erste Vorwärtsgang V1 über die erste Kupplung K1 und über das aktivierte Schaltelement A sowie über das aktivierte Schaltelement D schaltbar ist. Der zweite Vorwärtsgang V2 wird über die zweite Kupplung K2 und über das aktivierte Schaltelement D sowie über das aktivierte Schaltelement E geschaltet, wobei der dritte Vorwärtsgang V3 über die erste Kupplung K1 und über das aktivierte Schaltelement B sowie über das aktivierte Schaltelement D schaltbar ist. Der vierte Vorwärtsgang V4 wird über die zweite Kupplung K2 und über das aktivierte Schaltelement F geschaltet, wobei der fünfte Vorwärtsgang V5 über die erste Kupplung K1 und über das aktivierte Schaltelement A sowie über das aktivierte Schaltelement C geschaltet wird. Der sechste Vorwärtsgang V6 wird über die zweite Kupplung K2 und über das aktivierte Schaltelement C sowie über das aktivierte Schaltelement E geschaltet. Der siebente Vorwärtsgang V7 wird über die erste Kupplung K1 und über das aktivierte Schaltelement B sowie über das aktivierte Schaltelement C als Direktgang geschaltet.

Als Rückwärtsgangübersetzungen wird ein Rückwärtsgang R1 über die zweite Kupplung K2 und über das aktivierte Schaltelement H geschaltet. Ein weiterer Rückwärtsgang R2 wird über die erste Kupplung K1 und über das aktivierte Schaltelement A und über das aktivierte Schaltelement E sowie über das aktivierte Schaltelement H geschaltet. Zudem wird ein nächster Rückwärtsgang R3 über die erste Kupplung K1 und über das aktivierte Schaltelement B und über das aktivierte Schaltelement E sowie über das aktivierte Schaltelement H geschaltet, wobei eine Schaltung von dem Rückwärtsgang R1 in den Rückwärtsgang R2 lastschaltbar ist.

Aus dem Schaltschema gemäß Figur 2 ergibt sich ferner, dass zum Schalten des ersten Vorwärtsganges V1 die Zahnradstufen beziehungsweise Gangstufenräder der zweiten Radebene II und der vierten Radebene IV eingesetzt werden, wobei die zweite Radebene treibend und die vierte Radebene IV getrieben genutzt werden.

Zum Schalten des zweiten Vorwärtsganges V2 werden die Zahnradstufen der der ersten Radebene I und der vierten Radebene IV eingesetzt, wobei die erste Radebene I treibend und vierte Radebene IV getrieben genutzt werden.

Im Rahmen der Schaltung des dritten Vorwärtsganges V3 werden die Zahnradstufen der dritten Radebene III und der vierten Radebene IV eingesetzt, wobei die Radebene III treibend und die Radebene IV getrieben genutzt werden.

Zum Schalten des vierten Vorwärtsganges V4 werden die Zahnradstufen der ersten Radebene I und der fünften Radebene V eingesetzt, wobei die erste Radebene I treibend und die fünfte Radebene V getrieben genutzt werden.

Beim Schalten des fünften Vorwärtsganges V5 werden die Zahnradstufen der zweiten Radebene II und der dritten Radebene III eingesetzt, wobei die zweite Radebene II treibend und die dritte Radebene III getrieben benutzt werden.

Im Rahmen der Schaltung des sechsten Vorwärtsganges V6 werden die Zahnradstufen der ersten Radebene I und der dritten Radebene III eingesetzt, wobei die erste Radebene I treibend und die dritte Radebene III getrieben benutzt werden.

Schließlich wird der siebente Vorwärtsgang V7 als direkter Gang ausgeführt, indem die erste Getriebeeingangswelle w_k1 über die aktivierten Schaltelemente B und C mit der Abtriebswelle w_ab verbunden wird.

Zum Schalten des Rückwärtsganges R1 werden die Zahnradstufen der ersten Radebene I und der Rückwärtsgang-Radebene R eingesetzt, wobei die erste Radebene I treibend und die Rückwärtsgang-Radebene R getrieben benutzt werden. Zum Schalten des Rückwärtsganges R2 werden die Zahnradstufen der zweiten Radebene II und der Rückwärtsgang-Radebene R eingesetzt, wobei die zweite Radebene II treibend und die Rückwärtsgang-Radebene R getrieben benutzt werden. Schließlich werden zum Schalten des Rückwärtsganges R3 die dritte Radebene III und die Rückwärtsgang-Radebene R eingesetzt, wobei die dritte Radebene III treibend und die Rückwärtsgang-Radebene R getrieben benutzt werden.

### Bezugszeichen

- 1: Festrad der zweiten Getriebeeingangswelle
- 2: Festrad der zweiten Vorgelegewelle
- 3: Losrad der ersten Getriebeeingangswelle
- 4: Festrad der ersten Vorgelegewelle
- 5: Losrad der ersten Getriebeeingangswelle
- 6: Festrad der ersten Vorgelegewelle
- 7: Losrad der Abtriebswelle
- 8: Festrad der ersten Vorgelegewelle
- 9: Festrad der Abtriebswelle
- 10: Losrad der zweiten Vorgelegewelle
- 11: Losrad der Abtriebswelle
- 12: Festrad der zweiten Vorgelegewelle
- I: erste Radebene
- II: zweite Radebene
- III: dritte Radebene
- IV: vierte Radebene
- V: fünfte Radebene
- R: Rückwärtsgang-Radebene
- K1: erste Kupplung
- K2: zweite Kupplung
- w_an: Antriebswelle
- w_ab: Abtriebswelle
- w_k1: erste Getriebeeingangswelle
- w_k2: zweite Getriebeeingangswelle
- w_v1: erste Vorgelegewelle
- w_v2: zweite Vorgelegewelle
- w_zw: Zwischenwelle
- zw: Zwischenrad
- V1: erster Vorwärtsgang
- V2: zweiter Vorwärtsgang
- V3: dritter Vorwärtsgang
- V4: vierter Vorwärtsgang
- V5: fünfter Vorwärtsgang
- V6: sechster Vorwärtsgang
- V7: siebenter Vorwärtsgang
- R1: Rückwärtsgang
- R2: Rückwärtsgang
- R3: Rückwärtsgang
- A: Schaltelement
- B: Schaltelement
- C: Schaltelement
- D: Schaltelement
- E: Schaltelement
- F: Schaltelement
- H: Schaltelement
- u: Übersetzung
- ϕ: Stufensprung

## Patentansprüche

1. Doppelkupplungsgetriebe mit zwei Kupplungen (K1, K2), deren Eingangsseiten mit einer Antriebswelle (w_an) und deren Ausgangsseiten mit jeweils einer von zwei koaxial zueinander angeordneten Getriebeeingangswellen (w_k1, w_k2) verbunden sind, mit zwei koaxial zueinander angeordneten Vorgelegewellen (w_v1, w_v2) und mit einer zur Antriebswelle (w_an) koaxial angeordneten Abtriebswelle (w_ab), wobei mehrere Vorwärts-Radebenen (I, II, III, IV, V) vorgesehen sind, denen mehrere Schaltelemente (A, B, C, D, E, F, H) zum Schalten von Losrädern (3, 5, 7, 10, 11) und/oder Wellenverbindungen zugeordnet sind, so dass mehrere Vorwärtsgänge (V1, V2, V3, V4, V5, V6, V7) schaltbar sind, und die Anzahl der lastschaltbaren Vorwärtsgänge (V1, V2, V3, V4, V5, V6, V7) die Anzahl der Vorwärts-Radebenen (I, II, III, IV, V) um zumindest zwei übersteigt, **dadurch gekennzeichnet, dass** fünf Vorwärts- Radebenen (I, II, III, IV, V) zur Bildung der mehreren schaltbaren Vorwärtsgänge angeordnet sind, so dass zumindest sieben Vorwärtsgänge (V1, V2, V3, V4, V5, V6, V7) lastschaltbar sind.

2. Doppelkupplungsgetriebe nach Anspruch 1, **dadurch gekennzeichnet, dass** in der ersten Radebene (I) ein Festrad (1) der zweiten Getriebeeingangswelle (w_k2) mit einem Festrad (2) der zweiten Vorgelegewelle (w_v2) in Eingriff steht.

3. Doppelkupplungsgetriebe nach einem der vorangehenden Ansprüche, **dadurch gekennzeichnet, dass** in der zweiten Radebene (II) ein Losrad (3) der ersten Getriebeeingangswelle (w_k1) mit einem Festrad (4) der ersten Vorgelegewelle (w_v1) in Eingriff steht.

4. Doppelkupplungsgetriebe nach einem der vorangehenden Ansprüche, **dadurch gekennzeichnet, dass** in der dritten Radebene (III) ein Losrad (5) der ersten Getriebeeingangswelle (w_k1) mit einem Festrad (6) der ersten Vorgelegewelle (w_v1) in Eingriff steht.

5. Doppelkupplungsgetriebe nach einem der vorangehenden Ansprüche, **dadurch gekennzeichnet, dass** in der vierten Radebene (IV) ein Losrad (7) der Abtriebswelle (w_ab) mit einem Festrad (8) der ersten Vorgelegewelle (w_v1) in Eingriff steht.

6. Doppelkupplungsgetriebe nach einem der vorangehenden Ansprüche, **dadurch gekennzeichnet, dass** in der fünften Radebene (V) ein Festrad (9) der Abtriebswelle (w_ab) mit einem Losrad (10) der zweiten Vorgelegewelle (w_v2) in Eingriff steht.

7. Doppelkupplungsgetriebe nach einem der vorangehenden Ansprüche, **dadurch gekennzeichnet, dass** eine Rückwärtsgang-Radebene (R) vorgesehen ist und insbesondere in der Rückwärtsgang-Radebene (R) ein Losrad (11) der Abtriebswelle (w_ab) mit einem Zwischenrad (zw) einer Zwischenwelle (w_zw) zur Drehzahlumkehr für zumindest eine Rückwärtsgangübersetzung (R1, R2, R3) in Eingriff steht, wobei das Zwischenrad (zw) mit einem Festrad (12) der zweiten Vorgelegewelle (w_v2) in Eingriff steht.

8. Doppelkupplungsgetriebe nach einem der vorangehenden Ansprüche 3 bis 7, **dadurch gekennzeichnet, dass** ein insbesondere doppelseitig wirkendes Schaltelement (A-B) der zweiten Radebene (II) und der dritten Radebene (III) derart zugeordnet ist, dass bei aktiviertem Schaltelement (A) das Losrad (3) der zweiten Radebene (II) und bei aktiviertem Schaltelement (B) das Losrad (5) der dritten Radebene (III) jeweils drehfest mit der ersten Getriebeeingangswelle (w_k1) des ersten Teilgetriebes verbunden sind.

9. Doppelkupplungsgetriebe nach einem der vorangehenden Ansprüche 5 bis 8, **dadurch gekennzeichnet, dass** ein insbesondere doppelseitig wirkendes Schaltelement (C-D) der dritten Radebene (III) und der vierten Radebene (IV) derart zugeordnet ist, dass bei aktiviertem Schaltelement (C) das Losrad (5) der dritten Radebene (III) und bei aktiviertem Schaltelement (D) das Losrad (7) der vierten Radebene (IV) jeweils drehfest mit der Abtriebswelle (w_ab) verbunden sind.

10. Doppelkupplungsgetriebe nach einem der vorangehenden Ansprüche 6 bis 9, **dadurch gekennzeichnet, dass** ein insbesondere doppelseitig wirkendes Schaltelement (E-F) der vierten Radebene (IV) und der fünften Radebene (V) derart zugeordnet ist, dass bei aktiviertem Schaltelement (E) die zweite Vorgelegewelle (w_v2) mit der ersten Vorgelegewelle (w_v1) drehfest verbunden ist und dass bei aktiviertem Schaltelement (F) das Losrad (10) der fünften Radebene (V) drehfest mit der zweiten Vorgelegewelle (w_v2) verbunden ist.

11. Doppelkupplungsgetriebe nach einem der vorangehenden Ansprüche 7 bis 10, **dadurch gekennzeichnet, dass** der Rückwärtsgang-Radebene (R) ein insbesondere einfach wirkendes Schaltelement (H) zugeordnet ist, so dass im aktivierten Zustand des Schaltelements (H) das Losrad (11) der Rückwärtsgang-Radebene (R) drehfest mit der Abtriebswelle (w_ab) verbunden ist.

12. Doppelkupplungsgetriebe nach einem der vorangehenden Ansprüche, **dadurch gekennzeichnet, dass** bei einem Siebengang Doppelkupplungsgetriebe der erste Vorwärtsgang (V1) über die erste Kupplung (K1) und über das aktivierte erste Schaltelement (A) sowie über das aktivierte vierte Schaltelement (D) schaltbar ist, dass der zweite Vorwärtsgang (V2) über die zweite Kupplung (K2) und über das aktivierte vierte Schaltelement (D) sowie über das aktivierte fünfte Schaltelement (E) schaltbar ist, dass der dritte Vorwärtsgang (V3) über die erste Kupplung (K1) und über das aktivierte zweite Schaltelement (B) sowie über das aktivierte vierte Schaltelement (D) schaltbar ist, dass der vierte Vorwärtsgang (V4) über die zweite Kupplung (K2) und das aktivierte sechste Schaltelement (F) schaltbar ist, dass der fünfte Vorwärtsgang (V5) über die erste Kupplung (K1) und über das aktivierte erste Schaltelement (A) sowie über das aktivierte dritte Schaltelement (C) schaltbar ist, dass der sechste Vorwärtsgang (V6) über die zweite Kupplung (K2) und über das aktivierte dritte Schaltelement (C) sowie über das aktivierte fünfte Schaltelement (E) schaltbar ist, dass der siebente Vorwärtsgang (V7) über die erste Kupplung (K1) und über das aktivierte zweite Schaltelement (B) sowie über das aktivierte dritte Schaltelement (C) als Direktgang schaltbar ist.

13. Doppelkupplungsgetriebe nach einem der Ansprüche 7 bis 12, **dadurch gekennzeichnet, dass** zumindest ein erster Rückwärtsgang (R1) über die zweite Kupplung (K2) und über das aktivierte siebte Schaltelement (H) schaltbar ist und/oder dass zumindest ein zweiter Rückwärtsgang (R2) über die erste Kupplung (K1) und über das aktivierte erste Schaltelement (A) und über das aktivierte fünfte Schaltelement (E) sowie über das aktivierte siebte Schaltelement (H) schaltbar ist und/oder dass ein weiterer Rückwärtsgang (R3) über die erste Kupplung (K1) und über das aktivierte zweite Schaltelement (B) und über das aktivierte fünfte Schaltelement (E) sowie über das aktivierte siebte Schaltelement (H) schaltbar ist, wobei eine Schaltung von dem ersten Rückwärtsgang (R1) in den zweiten Rückwärtsgang (R2) lastschaltbar ist.

14. Doppelkupplungsgetriebe nach einem der vorangehenden Ansprüche, **dadurch gekennzeichnet, dass** zumindest ein Bereichsgruppengetriebe zum Vervielfachen der vorhandenen Gänge nach- oder vorgeschaltet ist.

15. Doppelkupplungsgetriebe nach einem der vorhergehenden Ansprüche, **dadurch gekennzeichnet, dass** zumindest eine Radebene sowohl als treibende Radebene als auch als getriebene Radebene verwendet werden kann.

## Claims

1. Double clutch transmission having two clutches (K1, K2), the input sides of which are connected to a drive shaft (w_an) and the output sides of which are connected to in each case one of two transmission input shafts (w_k1, w_k2) which are arranged coaxially with respect to one another, having two layshafts (w_v1, w_v2) which are arranged coaxially with respect to one another, and having an output shaft (w_ab) which is arranged coaxially with respect to the drive shaft (w_an), a plurality of forward gear planes (I, II, III, IV, V) being provided which are assigned a plurality of shifting elements (A, B, C, D, E, F, H) for shifting idler gears (3, 5, 7, 10, 11) and/or shaft connections, with the result that a plurality of forward gears (V1, V2, V3, V4, V5, V6, V7) can be selected, and the number of power shiftable forward gears (V1, V2, V3, V4, V5, V6, V7) exceeds the number of forward gear planes (I, II, III, IV, V) by at least two, **characterized in that** five forward gear planes (I, II, III, IV, V) are arranged for forming the plurality of shiftable forward gears, with the result that at least seven forward gears (V1, V2, V3, V4, V5, V6, V7) are power shiftable.

2. Double clutch transmission according to Claim 1, **characterized in that**, in the first gear plane (I), a fixed gear (1) of the second transmission input shaft (w_k2) is in engagement with a fixed gear (2) of the second layshaft (w_v2).

3. Double clutch transmission according to either of the preceding claims, **characterized in that**, in the second gear plane (II), an idler gear (3) of the first transmission input shaft (w_k1) is in engagement with a fixed gear (4) of the first layshaft (w_v1).

4. Double clutch transmission according to one of the preceding claims, **characterized in that**, in the third gear plane (III), an idler gear (5) of the first transmission input shaft (w_k1) is in engagement with a fixed gear (6) of the first layshaft (w_v1).

5. Double clutch transmission according to one of the preceding claims, **characterized in that**, in the fourth gear plane (IV), an idler gear (7) of the output shaft (w_ab) is in engagement with a fixed gear (8) of the first layshaft (w_v1).

6. Double clutch transmission according to one of the preceding claims, **characterized in that**, in the fifth gear plane (V), a fixed gear (9) of the output shaft (w_ab) is in engagement with an idler gear (10) of the second layshaft (w_v2).

7. Double clutch transmission according to one of the preceding claims, **characterized in that** a reverse-gear gear plane (R) is provided and, in particular in the reverse-gear gear plane (R), an idler gear (11) of the output shaft (w_ab) is in engagement with an intermediate gear (zw) of an intermediate shaft (w_zw) for rotational speed reversal for at least one reverse gear transmission ratio (R1, R2, R3), the intermediate gear (zw) being in engagement with a fixed gear (12) of the second layshaft (w_v2).

8. Double clutch transmission according to one of the preceding Claims 3 to 7, **characterized in that** a shifting element (A-B) of, in particular, double-sided action is assigned to the second gear plane (II) and the third gear plane (III) in such a way that, in the case of an activated shifting element (A), the idler gear (3) of the second gear plane (II) and, in the case of an activated shifting element (B), the idler gear (5) of the third gear plane (III) are connected to the first transmission input shaft (w_k1) of the first component transmission, in each case fixedly so as to rotate with it.

9. Double clutch transmission according to one of the preceding Claims 5 to 8, **characterized in that** a shifting element (C-D) of, in particular, double-sided action is assigned to the third gear plane (III) and the fourth gear plane (IV) in such a way that, in the case of an activated shifting element (C), the idler gear (5) of the third gear plane (III) and, in the case of an activated shifting element (D), the idler gear (7) of the fourth gear plane (IV) are connected to the output shaft (w_ab) in each case fixedly so as to rotate with it.

10. Double clutch transmission according to one of the preceding Claims 6 to 9, **characterized in that** a shifting element (E-F) of, in particular, double-sided action is assigned to the fourth gear plane (IV) and the fifth gear plane (V) in such a way that, in the case of an activated shifting element (E), the second layshaft (w_v2) is connected to the first layshaft (w_v1) fixedly so as to rotate with it, and that, in the case of an activated shifting element (F), the idler gear (10) of the fifth gear plane (V) is connected to the second layshaft (w_v2) fixedly so as to rotate with it.

11. Double clutch transmission according to one of the preceding Claims 7 to 10, **characterized in that** the reverse-gear gear plane (R) is assigned a shifting element (H) of, in particular, single action, with the result that, in the activated state of the shifting element (H), the idler gear (11) of the reverse-gear gear plane (R) is connected fixedly to the output shaft (w_ab) so as to rotate with it.

12. Double clutch transmission according to one of the preceding claims, **characterized in that**, in the case of a seven-gear double clutch transmission, the first forward gear (V1) can be selected via the first clutch (K1) and via the activated first shifting element (A) and via the activated fourth shifting element (D), **in that** the second forward gear (V2) can be selected via the second clutch (K2) and via the activated fourth shifting element (D) and via the activated fifth shifting element (E), **in that** the third forward gear (V3) can be selected via the first clutch (K1) and via the activated second shifting element (B) and via the activated fourth shifting element (D), **in that** the fourth forward gear (V4) can be selected via the second clutch (K2) and the activated sixth shifting element (F), **in that** the fifth forward gear (V5) can be selected via the first clutch (K1) and via the activated first shifting element (A) and via the activated third shifting element (C), **in that** the sixth forward gear (V6) can be selected via the second clutch (K2) and via the activated third shifting element (C) and via the activated fifth shifting element (E), and **in that** the seventh forward gear (V7) can be selected as a direct gear via the first clutch (K1) and via the activated second shifting element (B) and via the activated third shifting element (C).

13. Double clutch transmission according to one of Claims 7 to 12, **characterized in that** at least one first reverse gear (R1) can be selected via the second clutch (K2) and via the activated seventh shifting element (H), and/or **in that** at least one second reverse gear (R2) can be selected via the first clutch (K1) and via the activated first shifting element (A) and via the activated fifth shifting element (E) and via the activated seventh shifting element (H), and/or **in that** a further reverse gear (R3) can be selected via the first clutch (K1) and via the activated second shifting element (B) and via the activated fifth shifting element (E) and via the activated seventh shifting element (H), a shift from the first reverse gear (R1) into the second reverse gear (R2) being power shiftable.

14. Double clutch transmission according to one of the preceding claims, **characterized in that** at least one range group transmission is connected downstream or upstream in order to multiply the available gears.

15. Double clutch transmission according to one of the preceding claims, **characterized in that** at least one gear plane can be used both as a driving gear plane and as a driven gear plane.

## Revendications

1. Boîte de vitesses à embrayage double avec deux embrayages (K1, K2), dont les côtés d'entrée sont reliés à un arbre primaire (w_an) et dont les côtés de sortie sont reliés respectivement à un de deux arbres d'entrée de boîte de vitesses (w_k1, w_k2) disposés coaxialement l'un à l'autre, avec deux arbres intermédiaires (w_v1, w_v2) disposés coaxialement l'un à l'autre et avec un arbre de sortie (w_ab) disposé coaxialement à l'arbre primaire (w_an), dans laquelle il est prévu plusieurs plans de pignons de marche avant (I, II, III, IV, V), auxquels sont associés plusieurs éléments de changement de vitesse (A, B, C, D, E, F, H) pour l'engagement de pignons fous (3, 5, 7, 10, 11) et/ou de liaisons d'arbres, de telle manière que plusieurs rapports de marche avant (V1, V2, V3, V4, V5, V6, V7) puissent être engagés, et le nombre de rapports de marche avant pouvant être engagés sous charge (V1, V2, V3, V4, V5, V6, V7) dépasse d'au moins deux le nombre des plans de pignons de marche avant (I, II, III, IV, V), **caractérisée en ce que** cinq plans de pignons de marche avant (I, II, III, IV, V) sont disposés en vue de former les multiples rapports de marche avant pouvant être engagés, de telle manière qu'au moins sept rapports de marche avant (V1, V2, V3, V4, V5, V6, V7) puissent être engagés sous charge.

2. Boîte de vitesses à embrayage double selon la revendication 1, **caractérisée en ce que** dans le premier plan de pignons (I) un pignon fixe (1) du deuxième arbre d'entrée de boîte de vitesses (w_k2) engrène avec un pignon fixe (2) du deuxième arbre intermédiaire (w_v2).

3. Boîte de vitesses à embrayage double selon l'une quelconque des revendications précédentes, **caractérisée en ce que** dans le deuxième plan de pignons (II) un pignon fou (3) du premier arbre d'entrée de boîte de vitesses (w_k1) engrène avec un pignon fixe (4) du premier arbre intermédiaire (w_v1).

4. Boîte de vitesses à embrayage double selon l'une quelconque des revendications précédentes, **caractérisée en ce que** dans le troisième plan de pignons (III) un pignon fou (5) du premier arbre d'entrée de boîte de vitesses (w_k1) engrène avec un pignon fixe (6) du premier arbre intermédiaire (w_v1).

5. Boîte de vitesses à embrayage double selon l'une quelconque des revendications précédentes, **caractérisée en ce que** dans le quatrième plan de pignons (IV) un pignon fou (7) de l'arbre de sortie (w_ab) engrène avec un pignon fixe (8) du premier arbre intermédiaire (w_v1).

6. Boîte de vitesses à embrayage double selon l'une quelconque des revendications précédentes, **caractérisée en ce que** dans le cinquième plan de pignons (V) un pignon fixe (9) de l'arbre de sortie (w_ab) engrène avec un pignon fou (10) du deuxième arbre intermédiaire (w_v2).

7. Boîte de vitesses à embrayage double selon l'une quelconque des revendications précédentes, **caractérisée en ce qu'**il est prévu un plan de pignons de marche arrière (R) et en particulier dans le plan de pignons de marche arrière (R) un pignon fou (11) de l'arbre de sortie (w_ab) engrène avec un pignon intermédiaire (zw) d'un arbre de renvoi (w_zw) pour l'inversion du régime de rotation pour au moins une transmission en marche arrière (R1, R2, R3), dans laquelle le pignon intermédiaire (zw) engrène avec un pignon fixe (12) du deuxième arbre intermédiaire (w_v2).

8. Boîte de vitesses à embrayage double selon l'une quelconque des revendications précédentes 3 à 7, **caractérisée en ce qu'**un élément de changement de vitesse (A-B) opérant en particulier sur deux côtés est associé au deuxième plan de pignons (II) et au troisième plan de pignons (III), de telle manière que lorsque l'élément de changement de vitesse (A) est activé le pignon fou (3) du deuxième plan de pignons (II) et lorsque l'élément de changement de vitesse (B) est activé le pignon fou (5) du troisième plan de pignons (III) soient respectivement calés en rotation avec le premier arbre d'entrée de boîte de vitesses (w_k1) de la première boîte de vitesses partielle.

9. Boîte de vitesses à embrayage double selon l'une quelconque des revendications précédentes 5 à 8, **caractérisée en ce qu'**un élément de changement de vitesse (C-D) opérant en particulier sur deux côtés est associé au troisième plan de pignons (III) et au quatrième plan de pignons (IV), de telle manière que lorsque l'élément de changement de vitesse (C) est activé le pignon fou (5) du troisième plan de pignons (III) et lorsque l'élément de changement de vitesse (D) est activé le pignon fou (7) du quatrième plan de pignons (IV) soient respectivement calés en rotation avec l'arbre de sortie (w_ab).

10. Boîte de vitesses à embrayage double selon l'une quelconque des revendications précédentes 6 à 9, **caractérisée en ce qu'**un élément de changement de vitesse (E-F) opérant en particulier sur deux côtés est associé au quatrième plan de pignons (IV) et au cinquième plan de pignons (V), de telle manière que lorsque l'élément de changement de vitesse (E) est activé le deuxième arbre intermédiaire (w_v2) soit calé en rotation avec le premier arbre intermédiaire (w_v1) et que lorsque l'élément de changement de vitesse (F) est activé le pignon fou (10) du cinquième plan de pignons (V) soit calé en rotation avec le deuxième arbre intermédiaire (w_v2).

11. Boîte de vitesses à embrayage double selon l'une quelconque des revendications précédentes 7 à 10, **caractérisée en ce qu'**un élément de changement de vitesse (H) opérant en particulier de façon unique est associé au plan de pignons de marche arrière (R), de telle manière que dans l'état activé de l'élément de changement de vitesse (H) le pignon fou (11) du plan de pignons de marche arrière (R) soit solidaire en rotation avec l'arbre de sortie (w_ab).

12. Boîte de vitesses à embrayage double selon l'une quelconque des revendications précédentes, **caractérisée en ce que** dans une boîte de vitesses à embrayage double à sept rapports, le premier rapport de marche avant (V1) peut être engagé au moyen du premier embrayage (K1) et au moyen du premier élément de changement de vitesse activé (A) ainsi qu'au moyen du quatrième élément de changement de vitesse activé (D), **en ce que** le deuxième rapport de marche avant (V2) peut être engagé au moyen du deuxième embrayage (K2) et au moyen du quatrième élément de changement de vitesse activé (D) ainsi qu'au moyen du cinquième élément de changement de vitesse activé (E), **en ce que** le troisième rapport de marche avant (V3) peut être engagé au moyen du premier embrayage (K1) et au moyen du deuxième élément de changement de vitesse activé (B) ainsi qu'au moyen du quatrième élément de changement de vitesse activé (D), **en ce que** le quatrième rapport de marche avant (V4) peut être engagé au moyen du deuxième embrayage (K2) et du sixième élément de changement de vitesse activé (F), **en ce que** le cinquième rapport de marche avant (V5) peut être engagé au moyen du premier embrayage K1) et au moyen du premier élément de changement de vitesse activé (A) ainsi qu'au moyen du troisième élément de changement de vitesse activé (C), **en ce que** le sixième rapport de marche avant (V6) peut être engagé au moyen du deuxième embrayage (K2) et au moyen du troisième élément de changement de vitesse activé (C) ainsi qu'au moyen du cinquième élément de changement de vitesse activé (E), **en ce que** le septième rapport de marche avant (V7) peut être engagé au moyen du premier embrayage (K1) et au moyen du deuxième élément de changement de vitesse activé (B) ainsi qu'au moyen du troisième élément de changement de vitesse activé (C) comme rapport en prise directe.

13. Boîte de vitesses à embrayage double selon l'une quelconque des revendications précédentes 7 à 12, **caractérisée en ce qu'**au moins un premier rapport de marche arrière (R1) peut être engagé au moyen du deuxième embrayage (K2) et au moyen du septième élément de changement de vitesse activé (H) et/ou **en ce qu'**au moins un deuxième rapport de marche arrière (R2) peut être engagé au moyen du premier embrayage (K1) et au moyen du premier élément de changement de vitesse activé (A) et au moyen du cinquième élément de changement de vitesse activé (E) ainsi qu'au moyen du septième élément de changement de vitesse activé (H) et/ou **en ce qu'**un autre rapport de marche arrière (R3) peut être engagé au moyen du premier embrayage (K1) et au moyen du deuxième élément de changement de vitesse activé (B) et au moyen du cinquième élément de changement de vitesse activé (E) ainsi qu'au moyen du septième élément de changement de vitesse activé (H), dans lequel un changement de vitesse du premier rapport de marche arrière (R1) au deuxième rapport de marche arrière (R2) peut être effectué sous charge.

14. Boîte de vitesses à embrayage double selon l'une quelconque des revendications précédentes, **caractérisée en ce qu'**au moins une boîte de vitesses à groupes de zone est montée après ou avant afin de multiplier les rapports disponibles.

15. Boîte de vitesses à embrayage double selon l'une quelconque des revendications précédentes, **caractérisée en ce qu'**au moins un plan de pignons peut être utilisé aussi bien comme plan de pignons d'entraînement que comme plan de pignons entraîné.
